# FASCICULE DE BREVET EUROPEEN

(11) **EP 3 898 175 B1**
(45) Date de publication et mention de la délivrance du brevet: **25.01.2023**
(21) Numéro de dépôt: 19845607.1
(22) Date de dépôt: 18.12.2019
(51) Int. Cl.: B29C 49/42, B29C 49/06, B29C 49/64, B29C 49/78, B29K 67/00, B29L 31/00

(54) **DISPOSITIF DE CONVOYAGE DE PRÉFORMES POUR UN FOUR ET PROCÉDÉ DE COMMANDE D'UN TEL DISPOSITIF**
VORRICHTUNG ZUM FÖRDERN VON VORFORMLINGEN FÜR EINEN OFEN UND VERFAHREN ZUR STEUERUNG EINER SOLCHEN VORRICHTUNG
DEVICE FOR CONVEYING PREFORMS FOR AN OVEN AND METHOD FOR CONTROLLING SUCH A DEVICE

(30) Priorité: 19.12.2018 FR 1873397
(43) Date de publication de la demande: 27.10.2021
(73) Titulaire: Sidel Participations, 76930 Octeville-sur-Mer (FR)
(72) Inventeur: FEVRE, Sébastien, 76930 Octeville-sur-mer (FR)
(74) Mandataire: Sidel Group
(86) Numéro de dépôt international: PCT/FR2019/053142
(87) Numéro de publication internationale: WO 2020/128319

(56) Documents cités:
- DE-A1-102011 081 726
- US-A1- 2008 017 779
- US-A1- 2008 044 510
- US-A1- 2017 282 438
- US-B1- 7 284 778

## Description

### Domaine technique de l'invention

L'invention concerne un dispositif de convoyage de préformes et un procédé de commande d'un tel dispositif.

L'invention concerne plus particulièrement un dispositif de convoyage de préformes en matière thermoplastique pour un four de conditionnement thermique, ledit dispositif de convoyage de préformes comportant au moins une roue principale et une roue auxiliaire dont l'une au moins est entraînée en rotation pour déplacer au moins un moyen de transport auquel sont liés en déplacement une pluralité de moyens de préhension configurés pour coopérer chacun avec une préforme, des moyens d'actionnement commandés pour déplacer sélectivement chacun desdits moyens de préhension par rapport à une préforme - ou réciproquement - entre une position inactive et une position active de préhension.

L'invention concerne également un procédé de commande d'un tel dispositif de convoyage de préformes.

### Arrière-plan technique

On connaît de l'état de la technique de nombreux exemples de dispositif de convoyage pour réaliser le transport de préformes en matière thermoplastique dans un four de conditionnement thermique d'une installation de fabrication de récipients.

Une préforme est un corps creux obtenu par injection de matière thermoplastique, notamment de PET (Polytéréphtalate d'éthylène), qui comporte un corps globalement cylindrique se terminant par un fond hémisphérique, un col présentant sa forme finale et une collerette radiale séparant le col du corps.

Dans une installation de fabrication de récipients à partir de préformes, les préformes brutes d'injection sont ordinairement stockées en vrac dans une trémie.

Le document WO-03/084818 décrit un exemple de dispositif d'alimentation en préformes utilisé dans une installation de fabrication de récipients. Un autre exemple est décrit dans le document DE102011081726A1.

Les préformes sont d'abord prélevées à partir de la trémie, puis orientées et ordonnées en ligne et enfin transférées par une roue pour être introduites dans une unité de conditionnement thermique (communément appelée « four ») équipée en outre de moyens de chauffage, tels que des émetteurs infrarouge ou laser, à l'intérieur de laquelle les préformes sont portées à une température supérieure à leur température de transition vitreuse (laquelle est d'environ 80°C pour le PET).

Les préformes chaudes sont ensuite transférées vers une unité de moulage (encore appelée « souffleuse ») équipée d'une pluralité de moules dans lesquels les préformes sont formées à l'empreinte des récipients par soufflage ou étirage-soufflage.

Dans une telle installation de fabrication de récipients, les préformes (ou les récipients) sont convoyées entre les différentes unités assurant les étapes de fabrication par des roues de transfert dont de nombreuses réalisations sont connues, en particulier des roues de transfert comportant un plateau à encoches ou encore comportant des pinces.

Le dispositif de convoyage intégré au four est alimenté en continu en préformes par une roue de transfert, généralement du type à encoches, située en amont de la roue principale du four et, après leur conditionnement thermique, les préformes sont ensuite évacuées par une autre roue de transfert, généralement du type à pinces, située en aval de la roue principale.

Ainsi, les préformes sont d'abord transférées de la roue de transfert alimentant le four au dispositif de convoyage selon une opération de chargement, encore appelée « vêtissage », puis sont ensuite transférées du dispositif de convoyage vers l'autre roue de transfert selon une opération de déchargement, encore appelée « dévêtissage ».

Le dispositif de convoyage des préformes à l'intérieur du four est conçu pour transporter les préformes en ligne avec un pas (ou écartement) donné entre deux préformes consécutives et suivant un parcours le long d'au moins une partie duquel sont agencés les moyens de chauffage du corps des préformes.

Le document WO-2017/060654 décrit et représente un exemple de réalisation d'un dispositif de convoyage de préformes pour un four de conditionnement thermique.

Le dispositif de convoyage comporte au moins un moyen de transport tel qu'une chaîne comportant une pluralité de maillons ayant chacun une platine sur laquelle sont montés lesdits moyens de préhension d'une préforme.

On connaît de nombreux exemples de réalisation de dispositifs de convoyage comportant des moyens de préhension d'une préforme par son col, de tels moyens de préhension sont parfois appelés « tournette » (ou « *spindle »* en anglais).

A titre d'exemples de réalisation d'une telle « tournette » pour préforme, on pourra se reporter de manière non limitative aux documents WO-00/48819, WO-2014/135631, EP-1.880.825 ou encore EP-3.228.438 au nom de la Demanderesse.

Selon le document WO-2017/060654, la tournette formant les moyens de préhension comprend une douille fixée sur la platine et un mandrin pourvu d'une tête de préhension.

Le mandrin est monté mobile en translation par rapport à la douille entre une position inactive dans laquelle la tête est logée dans la douille, et une position active dans laquelle la tête fait saillie par rapport à une face inférieure de la douille, notamment pour venir s'emmancher, s'emboîter, dans le col d'une préforme.

A l'exception de certaine application (notamment dite chauffe préférentielle), la tournette est généralement entraînée en rotation sur elle-même, donc par rapport à la platine, au moyen d'une crémaillère qui engrène un pignon solidaire du mandrin au cours de la translation de la chaîne de transport.

De la sorte, la préforme emmanchée sur la tête du mandrin est entraînée à la fois en translation et en rotation dans le four, de manière à en exposer pleinement le corps au rayonnement infrarouge ou laser des moyens de chauffage.

Une telle chaîne de transport est habituellement montée entre deux roues, respectivement une roue principale et une roue auxiliaire, la roue principale au moins étant motrice, c'est-à-dire menante, afin d'entraîner ladite chaîne de transport en boucle fermée.

La structure d'une telle chaîne de transport est par exemple décrite dans le brevet européen EP-0.935.572 (Sidel) auquel on se reportera de manière non limitative pour de plus amples détails.

Le déplacement en translation des moyens de préhension, plus particulièrement du mandrin, entre lesdites positions inactive et active est commandé par des moyens d'actionnement constitués par un système mécanique à came et galet.

Toutefois, le fonctionnement d'un tel système mécanique requiert d'utiliser de la graisse ce qui présente différents inconvénients au nombre desquels figurent les opérations de maintenance pour effectuer le graissage, les risques de souillure par la graisse de l'environnement de fabrication et ce faisant des préformes.

La cadence de production dans une installation de fabrication de récipients est élevée, généralement supérieure à 50.000 récipients par heure, ce qui correspond à la cadence de défilement des préformes dans le four.

A de telle cadence, des problèmes de positionnement peuvent survenir comme par exemple le fait qu'une préforme ne soit pas correctement centrée par rapport au mandrin qui ne peut dès lors pas s'emmancher correctement dans le col, on parle encore de « défaut de vêtissage ».

Or, à la sortie de la roue principale, une préforme qui n'est pas tenue correctement peut être projetée et venir endommager certaines pièces du four, en particulier de venir casser les émetteurs infrarouge ou laser.

Il est donc alors nécessaire d'arrêter la roue, d'interrompre toute la production, le temps d'intervenir pour éliminer les préformes éjectées.

Un tel arrêt a ainsi des conséquences négatives sur le plan économique en affectant particulièrement les rendements de production.

C'est la raison pour laquelle, il est connu de prévoir un mécanisme d'éjection pour éliminer les préformes qui sont mal positionnées après l'opération de vêtissage.

Le document FR-2.872.805 décrit un exemple d'un tel mécanisme d'éjection pour éjecter des préformes.

Lorsqu'un capteur détecte un défaut de vêtissage d'une préforme, un vérin est commandé pour faire remonter le mandrin de la tournette et permettre l'éjection de préformes.

Cependant, un tel mécanisme d'éjection présente l'inconvénient d'éjecter un nombre trop important de préformes, un groupe de préformes, dès qu'un défaut de vêtissage est détecté.

De plus, la quantité de préformes devant être éjectées pour supprimer une préforme mal prise sur un mandrin de tournette augmente avec la cadence de production.

Le but de l'invention est notamment de proposer une nouvelle conception de dispositif de convoyage permettant de résoudre au moins une partie des inconvénients de l'état de la technique tout en conservant un dispositif de convoyage qui soit susceptible de fonctionner de manière fiable à des cadences élevées.

### Résumé de l'invention

Dans ce but, l'invention propose un dispositif de convoyage du type décrit précédemment, caractérisé en ce que lesdits moyens d'actionnement comportent des actionneurs électriques qui sont embarqués sur ladite roue principale du dispositif de convoyage.

Par comparaison avec un système mécanique à came(s) et galet(s) formant les moyens d'actionnement selon l'état de la technique, un actionneur électrique permet avantageusement de supprimer l'utilisation de graisse et par conséquent les risques de projection tout comme les interventions de maintenance associées.

Avantageusement, l'actionneur électrique permet de réaliser sélectivement l'éjection d'une seule préforme et non plus d'un groupe de plusieurs préformes comme cela était le cas jusqu'alors avec un dispositif d'éjection selon l'état de la technique.

Avantageusement, chaque actionneur électrique est susceptible d'être commandé individuellement, indépendamment des autres actionneurs électriques embarqués sur la roue principale.

La commande d'un actionneur électrique pour entraîner en déplacement les moyens de préhension par rapport à une préforme (ou entraîner en déplacement une préforme par rapport à des moyens de préhension) est effectuée sélectivement et non systématiquement comme avec un système mécanique à came et galet.

La commande d'un actionneur électrique pour réaliser l'opération de vêtissage d'une préforme est commandée sélectivement, par exemple selon des données de fabrication telles que des données liées au fonctionnement de la ligne de production en aval et/en amont du four de conditionnement thermique.

En effet, si un problème détecté en amont du four a par exemple eut pour conséquence l'éjection d'une préforme, il n'y a alors aucune préforme à prendre en charge par les moyens de préhension et la commande de l'actionneur électrique n'est pas réalisée au bénéfice notamment d'une économie d'énergie.

De la même manière, si un problème est détecté en aval du four, par exemple au niveau de l'unité de soufflage, de l'unité d'étiquetage ou de l'unité de remplissage alors l'opération de vêtissage d'une ou plusieurs préformes n'est avantageusement pas réalisée.

Toute préforme non saisie lors de l'opération de vêtissage demeure sur la roue de transfert et est ensuite éliminée, par exemple par des moyens d'éjection associés à la roue de transfert.

Avantageusement, l'éjection ciblée d'au moins une préforme est rendue possible par la commande individuelle d'au moins l'un des actionneurs électriques embarqués sur la roue principale du dispositif de transport.

L'éjection sélective d'une préforme est notamment mais non exclusivement réalisée lorsqu'une préforme est mal prise en entrée du four.

En effet, une éjection peut également être réalisée en sortie du four lorsqu'une préforme chauffée est détectée comme étant non-conforme.

Ainsi, la mise en oeuvre d'actionneur électrique offre non seulement une grande flexibilité par comparaison à l'état de la technique mais également de nouvelles possibilités comme celle de commander sélectivement l'opération de vêtissage et/ou de dévêtissage.

Avantageusement, les actionneurs électriques formant les moyens d'actionnement offrent un grande facilité de paramétrage lorsque des modifications des paramètres de fonctionnement (course, vitesse, etc.) sont requises, typiquement en cas de changement d'application pour fabriquer des récipients avec d'autres préformes.

Par comparaison avec des moyens d'actionnement mécanique de type à came(s) et galet(s), on réduit de manière substantielle la durée de l'arrêt de l'installation de fabrication pour procéder à de telles modifications de paramètres de fonctionnement.

Selon d'autres caractéristiques de l'invention :
- l'actionneur électrique est commandé sélectivement pour déplacer, relativement à la préforme, les moyens de préhension de la position inactive vers la position active pour réaliser un vêtissage de la préforme et de la position active vers la position inactive pour réaliser un dévêtissage ou une éjection de la préforme ;
- l'actionneur électrique est commandé sélectivement pour déplacer, relativement à la préforme, les moyens de préhension de la position inactive vers la position active pour réaliser un vêtissage de la préforme ;
- l'actionneur électrique est commandé sélectivement pour déplacer, relativement à la préforme, les moyens de préhension de la position active vers la position inactive pour réaliser un dévêtissage de la préforme ;
- l'actionneur électrique est commandé sélectivement pour déplacer, relativement à la préforme, les moyens de préhension de la position active vers la position inactive pour réaliser une éjection de la préforme ;
- les moyens d'actionnement comportent un embout de liaison qui est configuré pour coopérer mécaniquement avec un organe d'actionnement que comportent les moyens de préhension de manière à réaliser une liaison mécanique ;
- les moyens d'actionnement comportent un embout de liaison qui est configuré pour coopérer magnétiquement avec un organe d'actionnement que comportent les moyens de préhension de manière à réaliser une liaison magnétique ;
- l'actionneur électrique est commandé sélectivement pour déplacer la préforme, relativement aux moyens de préhension, de la position inactive vers la position active pour réaliser un vêtissage de la préforme et de la position active vers la position inactive pour réaliser un dévêtissage ou une éjection de la préforme ;
- l'actionneur électrique est commandé sélectivement pour déplacer la préforme, relativement aux moyens de préhension, de la position inactive vers la position active pour réaliser un vêtissage de la préforme ;
- l'actionneur électrique est commandé sélectivement pour déplacer la préforme, relativement aux moyens de préhension, de la position active vers la position inactive pour réaliser un dévêtissage de la préforme ;
- l'actionneur électrique est commandé sélectivement pour déplacer la préforme, relativement aux moyens de préhension, de la position active vers la position inactive pour réaliser une éjection de la préforme.

Dans ce but, l'invention propose encore un procédé de commande d'un dispositif de convoyage de préforme en matière thermoplastique pour un four de conditionnement thermique, ledit dispositif de convoyage comportant au moins une roue principale sur laquelle sont embarqués des actionneurs électriques qui sont chacun aptes à entraîner en déplacement des moyens de préhension relativement à une préforme - ou réciproquement une préforme relativement à des moyens de préhension - entre une position inactive et une position active de préhension, caractérisé en ce que le procédé de commande comporte au moins une étape de vêtissage consistant à commander sélectivement l'actionneur électrique à un point de vêtissage de la roue principale pour entraîner en déplacement les moyens de préhension ou la préforme de la position inactive jusqu'à la position active de préhension.

Avantageusement, le procédé de commande comporte au moins une étape de dévêtissage consistant à commander sélectivement l'actionneur électrique à un point de dévêtissage de la roue principale pour entraîner en déplacement les moyens de préhension ou la préforme de la position active de préhension jusqu'à la position inactive.

Avantageusement, le procédé de commande comporte au moins une étape d'éjection consistant à commander sélectivement l'actionneur électrique sur un tronçon d'éjection de la roue principale pour entraîner en déplacement les moyens de préhension ou la préforme de la position active jusqu'à la position inactive afin de provoquer l'éjection de la préforme.

Avantageusement, ladite au moins une étape d'éjection est réalisée sur un tronçon d'éjection situé en aval du point de vêtissage.

Avantageusement, ladite au moins une étape d'éjection est réalisée dans un tronçon d'éjection situé en amont du point de dévêtissage.

### Brève description des figures

D'autres caractéristiques et avantages de l'invention apparaitront au cours de la lecture de la description détaillée qui va suivre pour la compréhension de laquelle on se reportera aux dessins annexés dans lesquels :

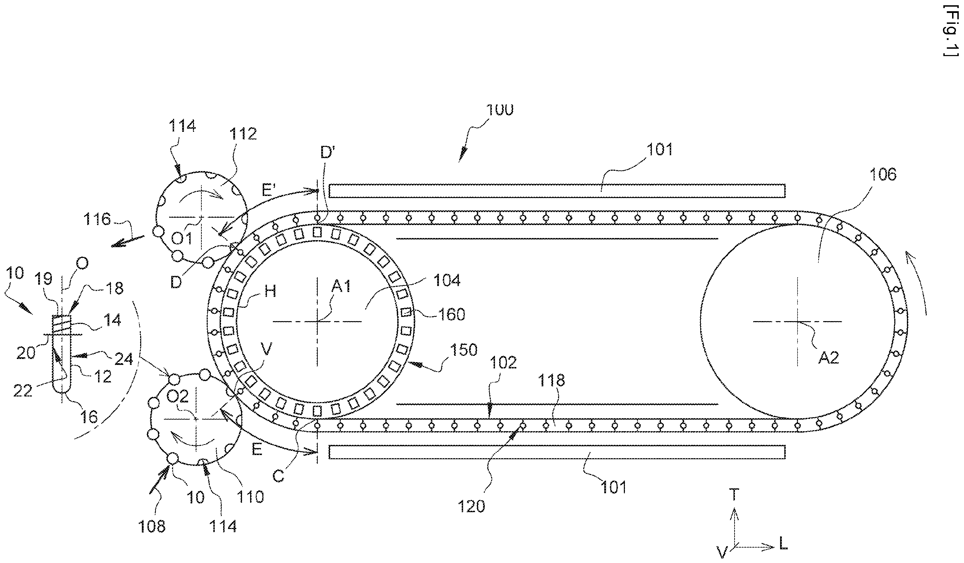

[Fig. 1] La figure 1 est une vue de dessus qui représente schématiquement une partie d'une installation de fabrication de récipients comportant un four de conditionnement thermique et qui illustre un dispositif de transport de préformes dans un tel four qui comporte une roue principale embarquant des actionneurs électriques formant les moyens d'actionnement des moyens de préhension des préformes.

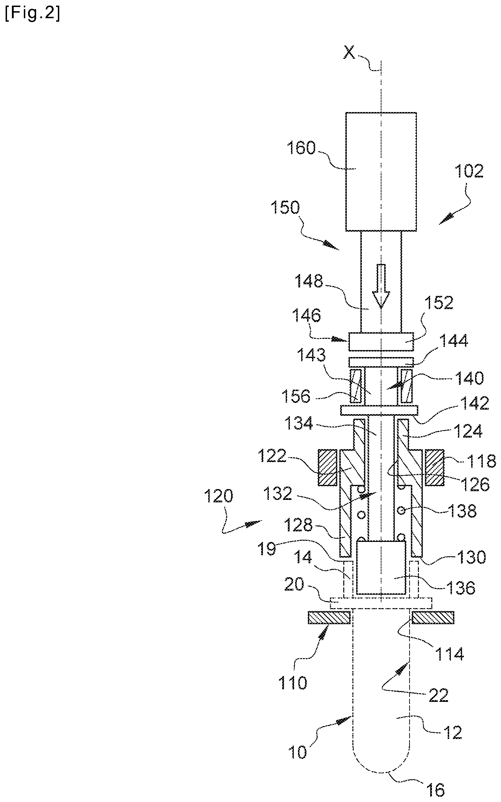

[Fig. 2] La figure 2 est une vue de face, partiellement en coupe, qui représente un premier mode de réalisation dans lequel chaque actionneur électrique embarqué est commandé pour déplacer sélectivement des moyens de préhension qui sont montés mobiles relativement à une préforme et qui illustre en position active de préhension les moyens de préhension qui sont aptes à être entraîné en déplacement par un actionneur électrique.

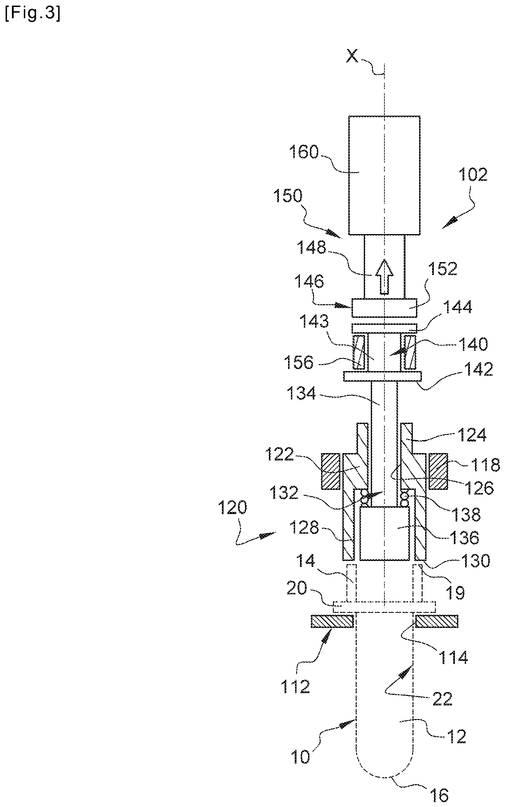

[Fig. 3] La figure 3 est une vue de face, partiellement en coupe, qui représente ledit premier mode de réalisation dans lequel chaque actionneur électrique embarqué est commandé pour déplacer sélectivement des moyens de préhension qui sont montés mobiles relativement à une préforme et qui illustre en position inactive les moyens de préhension qui sont aptes à être entraîné en déplacement par ledit actionneur électrique.

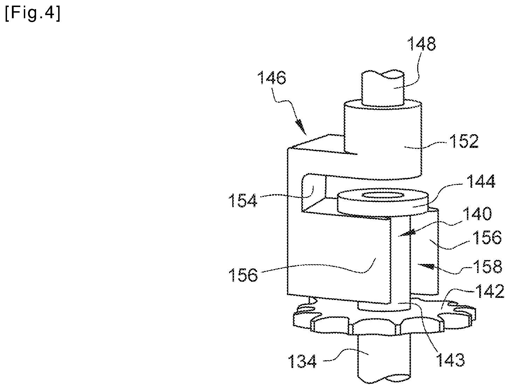

[Fig. 4] La figure 4 est vue en perspective qui représente un exemple de réalisation d'un embout est lié en déplacement à l'actionneur électrique et qui illustre la liaison mécanique par coopération de formes entre ledit embout de liaison et l'organe d'actionnement que comportent les moyens de préhension lors des opérations de vêtissage et de dévêtissage.

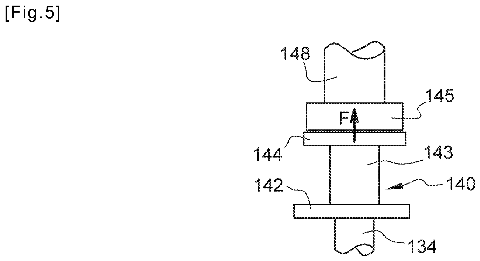

[Fig. 5] La figure 5 est une vue schématique de côté qui représente une variante de réalisation d'un embout de liaison et qui illustre la liaison magnétique entre ledit embout de liaison et l'organe d'actionnement que comportent les moyens de préhension lors des opérations de vêtissage et de dévêtissage.

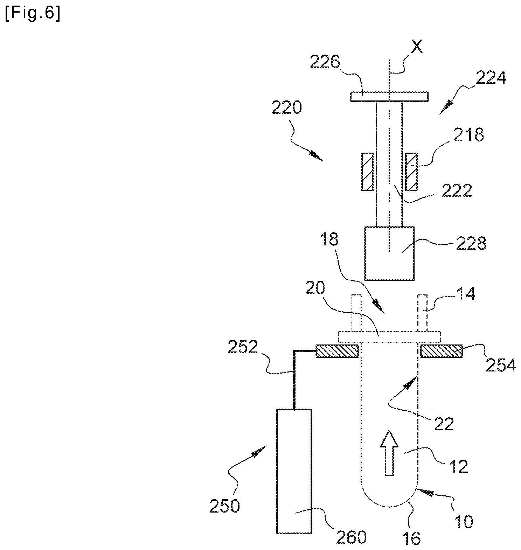

[Fig. 6] La figure 6 est une vue de face, partiellement en coupe, qui représente un deuxième mode de réalisation dans lequel chaque actionneur électrique embarqué est commandé pour déplacer sélectivement une préforme relativement à des moyens de préhension qui sont fixes et qui illustre en position inactive une préforme qui est apte à être entraînée en déplacement par un actionneur électrique.

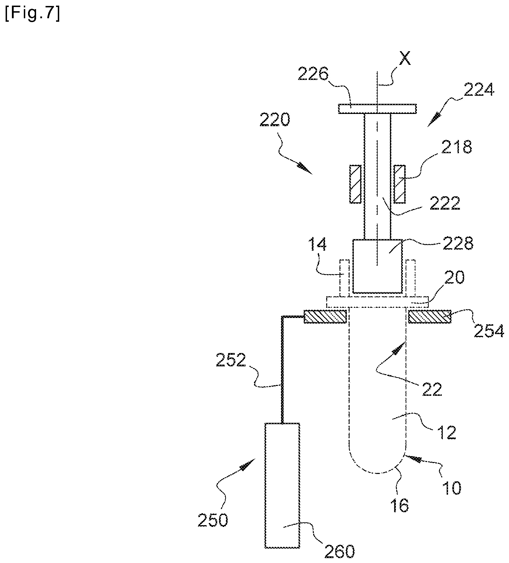

[Fig. 7] La figure 7 est une vue de face, partiellement en coupe, qui représente ledit deuxième mode de réalisation dans lequel chaque actionneur électrique embarqué est commandé pour déplacer sélectivement une préforme relativement à des moyens de préhension qui sont fixes et qui illustre en position active de préhension une préforme qui est apte à être entraînée en déplacement par ledit actionneur électrique.

### Description détaillée de l'invention

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport à l'axe d'une préforme ou l'axe de rotation d'une roue.

On utilisera également à titre non limitatif les termes « avant » et « arrière » en référence à l'orientation longitudinale, ainsi que « supérieur » et « inférieur » ou « haut » et « bas » en référence à l'orientation verticale et enfin « gauche » et « droite » en référence à l'orientation transversale.

Les termes « intérieur » ou « extérieur » et « interne » ou « externe » sont respectivement utilisés par rapport à une préforme ou une roue d'une manière générale notamment pour désigner un élément situé soit dedans, soit en dehors de la préforme.

Les termes « amont » et « aval » sont respectivement utilisés en référence au flux de préformes qui sont transportées de l'amont vers l'aval.

On a représenté schématiquement sur la figure 1, un four 100 de conditionnement thermique de préformes 10 en matière thermoplastique.

Le four 100 constitue l'une des unités que comporte une installation (non représentée) de fabrication de récipients à partir de préformes 10 en matière thermoplastique.

Le four 100 comporte des moyens 101 de chauffage, tels que des émetteurs infrarouge, du type lampe halogène ou diode laser, destinés à chauffer un corps 12 des préformes 10 convoyées à l'intérieur du four.

Dans l'exemple de la figure 1, les préformes 10 suivent un parcours en « U » dans le four 100 comportant successivement de l'amont vers l'aval un tronçon rectiligne de chauffage, dit de pénétration, un tronçon curviligne, dit de stabilisation, et un tronçon rectiligne de chauffage, dit de distribution.

Les moyens 101 de chauffage sont agencés sur les deux tronçons de chauffage du parcours, respectivement de pénétration et de distribution.

Selon l'exemple représenté sur la figure 1, la préforme 10 comporte principalement un corps 12 creux qui, muni d'un col 14, s'étend axialement suivant un axe O principal.

Le corps 12 de la préforme 10 est fermé à une extrémité par un fond 16 et comporte axialement, à l'extrémité opposée, une ouverture 18 délimitée par un bord 19 du col 14, ledit bord 19 étant encore appelé « buvant ».

La préforme 10 comporte une collerette 20 qui s'étend radialement en saillie vers l'extérieur, au niveau de la jonction du col 14 avec le corps 12.

La préforme 10 est fabriquée par moulage par injection de matière thermoplastique, en particulier en PET (polytéréphtalate d'éthylène), de sorte que le col 14 présente sa forme définitive, soit celle du col du récipient.

Le col 14 de la préforme 10 selon l'exemple est muni d'un filetage afin de permettre une fermeture ultérieure du récipient par un bouchon à vis complémentaire.

La préforme 10 comporte une surface 22 interne qui s'étend axialement du fond 16 jusqu'au bord 19 du col 14 délimitant l'ouverture 18. Le corps 12 de la préforme 10 comporte une surface externe 24.

Tel que représenté sur la figure 1, la préforme 10 occupe une position dite « col en haut » correspondant à la position dans laquelle chaque préforme 10 est préférentiellement transportée à travers l'installation.

De préférence, chaque préforme 10 est convoyée ici en position « col en haut » dans le four 100.

En variante, les préformes 10 pourraient être convoyées en position « col en bas », en particulier pour être chauffées, les changements d'orientation entre lesdites positions « col en haut » et « col en bas » étant réalisés à l'aide de moyens de retournement bien connus de l'état de la technique.

La fabrication d'un récipient, tel qu'une bouteille, à partir d'une préforme 10 en matière thermoplastique préalablement fabriquée comporte une étape de conditionnement thermique du corps 12 de la préforme 10 qui est réalisée dans le four 100.

Le four 100 comporte un dispositif 102 de convoyage de préformes 10 comportant au moins une roue 104 principale et une roue 106 auxiliaire dont l'une au moins est entraînée en rotation.

La roue 104 principale et la roue 106 auxiliaire présentent respectivement un axe A1 de rotation et un axe A2 de rotation.

De préférence, la roue 104 principale est entraînée en rotation par un moteur (non représenté) et la roue 106 auxiliaire est liée en rotation à ladite roue 104 principale par des moyens de transmission, tels qu'une courroie, afin d'être entraînée de manière synchrone.

Le four 100 est alimenté en préformes 10 par un dispositif 108 d'alimentation qui, représenté schématiquement par une flèche sur la figure 1, comporte au moins une roue 110 de transfert, dite d'entrée, présentant un axe 02 de rotation

Une autre roue 112 de transfert, dite de sortie, est agencée en aval de la roue 104 principale pour transporter les préformes 10 en aval du four 100 de conditionnement thermique.

Après la roue 112 de transfert, les préformes 10 chaudes sont transportées jusqu'à une unité de moulage (non représentée), encore appelée « souffleuse », dans laquelle chaque préforme 10 est transformée en récipient dans un moule par soufflage ou par étirage-soufflage.

Le transport des préformes 10 jusqu'à l'unité de moulage est par exemple assuré par au moins une autre roue 116 de transfert de type à pinces représentée schématiquement par une flèche sur la figure 1 et qui est agencée en aval de la roue 112.

De préférence, lesdites roues 110 et 112 de transfert sont munies d'une pluralité d'encoches 114 qui sont réparties circonférentiellement de manière régulière autour de leur axe O1 et O2 de rotation.

Le dispositif 102 de convoyage de préformes 10 comporte au moins un moyen 118 de transport.

De préférence, le moyen 118 de transport comporte au moins une chaîne comportant une pluralité de maillons ayant chacun une platine sur laquelle sont montés des moyens 120 de préhension.

La structure d'une chaîne 118 de transport et des moyens 120 de préhension, encore appelés « tournette », sont connus de l'état de la technique.

Le dispositif 102 de convoyage comporte une pluralité de moyens 120 de préhension qui sont ainsi liés en déplacement à la chaîne 118 de transport entraînée en boucle fermée.

Sur les figures 2 et 3, la structure de la chaîne 118 de transport n'a pas été représentée. On pourra se reporter aux documents WO-2017/060654 et EP-0.935.572 précités pour de plus amples détails.

On décrira toutefois ci-après un exemple de montage d'un moyen 120 de préhension sur la chaîne 118 de transport, chacun des moyens 120 de préhension du dispositif 102 de convoyage étant identique la description de l'un vaut pour les autres.

Un moyen 120 de préhension comprend, en premier lieu, une douille 122 fixée sur une platine (non représentée), éventuellement avec possibilité de rotation, de la chaîne 118 de transport.

La douille 122 comprend avantageusement un manchon 124 tubulaire qui s'étend au travers d'une chape (non représentée), avec jeu (pour permettre la rotation de la douille 122 par rapport à la platine), ou de manière serrée (pour, au contraire, rendre solidaire la douille 122 de la platine). Le manchon 124 comprend un alésage 126 central qui définit un axe X vertical.

Sur les figures 2 et 3, on a représenté schématiquement la chaîne 118 de transport sans en détailler toute la structure telle que la platine ou encore la chape.

A une extrémité inférieure du manchon 124, la douille 122 présente une section élargie qui se prolonge par une jupe 128 cylindrique présentant, à une extrémité inférieure, une face 130 inférieure annulaire.

A une extrémité supérieure du manchon 124, la douille 122 porte par exemple un anneau (non représenté) qui assure, conjointement avec la section élargie, la fixation en translation de la douille 122 par rapport à la platine.

Un moyen 120 de préhension comprend, en deuxième lieu, un mandrin 132 monté mobile en translation, suivant l'axe X vertical, par rapport à la douille 122.

Le mandrin 132 comprend une tige 134 cylindrique montée en libre rotation autour de l'axe X dans l'alésage 126 de la douille 122, de préférence avec interposition de paliers (non représentés) pour réduire les frottements.

Le mandrin 132 comprend, à une extrémité inférieure de la tige 134, une tête 136 de plus grand diamètre, qui s'étend dans la jupe 128 de la douille 122.

Le mandrin 132 est monté non seulement en libre rotation par rapport à la douille 122, mais également en translation, entre une position active (figure 2) dans laquelle la tête 136 fait saillie par rapport à la face 130 inférieure de la douille 122 pour s'emmancher dans le col 14 d'une préforme 10 et une position inactive (figure 3), dans laquelle la tête 136 est escamotée à l'intérieur de la jupe 128.

Dans le premier mode de réalisation, la préforme 10 est transportée dans une position col 14 en haut, la position active des moyens 120 de préhension correspond verticalement, suivant l'axe X, à une position basse et la position inactive des moyens 120 de préhension à une position haute.

Le moyen 120 de préhension comprend un ressort 138 de rappel qui, interposé entre la tête 136 du mandrin 132 et la douille 122, fonctionne en compression.

Tel qu'illustré sur les figures 2 et 3, le ressort 138 est interposé entre une face supérieure de la tête 136 et un lamage formé dans la section élargie de la douille 122.

Avantageusement, le ressort 138 de rappel sollicite le moyen 120 de préhension vers la position active, plus précisément le ressort 138 assure un rappel automatique en position active.

Le ressort 138 de rappel garantit la position occupée par la partie mobile des moyens 120 de préhension formée par le mandrin 132 dont la tige 134 comporte la tête 136 de préhension, par rapport à la partie fixe formée par la douille 122.

Selon un exemple de réalisation, la tête 136 du mandrin 132 est avantageusement pourvue d'un joint torique (non représenté), de préférence réalisé dans un matériau élastique tel qu'un élastomère.

Avantageusement, la tête 136 du mandrin 132 présente ainsi un diamètre externe qui est égal ou légèrement supérieur au diamètre interne du col 14 d'une préforme 10, de façon à assurer la sustentation de la préforme 10 par frottement (ou friction) contre la surface 22 interne au niveau du col 14, lorsque ladite tête 136 est en position active comme représentée sur la figure 2.

A une extrémité supérieure, le mandrin 132 est pourvu d'un organe 140 d'actionnement qui, présentant globalement une forme de bobine, est monté sur la tige 134, solidaire en rotation de celle-ci.

Dans l'exemple illustré sur la figure 2 à 3, l'organe 140 d'actionnement comporte un pignon 142, un fût 143 à une extrémité duquel s'étend ledit pignon 142 et, à l'opposé de celui-ci, un flasque 144, ici de diamètre inférieur au pignon 142.

De préférence, l'organe 140 d'actionnement est réalisé en une seule pièce, monobloc.

Le pignon 142 est destiné à engrener avec des moyens d'engrènement (non représentés), tels qu'une crémaillère, qui s'étendent le long de tout ou une partie du parcours de chauffe en « U » à l'intérieur du four 100 de façon à entraîner le mandrin 132 du moyen 120 de préhension en rotation pour exposer tout le corps 12 de la préforme 10 au rayonnement infrarouge.

La présence d'une crémaillère dépend des applications, en particulier du type de récipients à fabriquer. Pour certaines applications, dite de « chauffe préférentielle », la crémaillère est supprimée de sorte que, en l'absence d'engrènement du pignon 142, la préforme 10 n'est alors pas entraînée en rotation sur elle-même autour de son axe O.

Tel qu'illustré sur les figures 2 et 3, l'organe 140 d'actionnement est destiné à coopérer avec un embout 146 de liaison qui est solidaire d'une tige 148 que comportent des moyens 150 d'actionnement aptes à commander sélectivement en déplacement entre lesdites positions active et inactive l'un des moyens 120 de préhension.

De préférence, l'embout 146 de liaison est configuré pour coopérer avec l'organe 140 d'actionnement de manière à réaliser une liaison de type mécanique afin de commander les moyens 120 de préhension entre la position active (figure 2) et position inactive (figure 3), en entraînant verticalement en translation le mandrin 132 relativement à la douille 122.

Tel qu'illustré sur la figure 4, l'embout 146 de liaison comporte une partie 152 supérieure pour sa fixation à l'extrémité libre de la tige 148 des moyens 150 d'actionnement.

L'embout 146 de liaison présente globalement une forme en « C ». La partie 152 supérieure de fixation se prolonge par un corps 154 qui, déporté par rapport à l'axe X, s'étend globalement verticalement et à partir de l'extrémité inférieure duquel s'étendent radialement deux bras 156 délimitant entre eux un logement 158.

Avantageusement, l'embout 146 est destiné à s'engager radialement avec l'organe 140 d'actionnement, le logement 158 est configuré pour recevoir le fût 143, les bras 156 s'engageant de part et d'autre dudit fût 143 qui s'étend verticalement entre le flasque 144 et le pignon 142.

Les bras 156 sont destinés à exercer sur la face inférieure du flasque 144 un effort de traction, verticalement vers le haut, pour entraîner en déplacement le mandrin 132 de la position active vers la position inactive.

On décrira ci-après par comparaison avec les figures 2 à 4, une variante de réalisation d'un embout de liaison qui est représentée schématiquement à la figure 5.

Selon cette variante, les moyens 150 d'actionnement comportent un embout 145 de liaison qui est apte à être lié magnétiquement avec l'organe 140 d'actionnement des moyens 120 de préhension de préformes 10.

Pour obtenir une liaison magnétique, l'une au moins des deux pièces parmi l'embout 145 de liaison et l'organe 140 d'actionnement est réalisée dans un matériau magnétique, l'autre dans un matériau métallique.

L'embout 145 de liaison comporte par exemple un ou plusieurs aimants susceptibles d'exercer sur l'organe 140 d'actionnement une force F d'attraction magnétique pour les lier au moins verticalement en déplacement.

La liaison magnétique permet de lier en translation l'embout 145 de liaison des moyens 150 d'actionnement avec l'organe 140 d'actionnement des moyens 120 de préhension.

De préférence, l'embout 145 de liaison comporte au moins une partie réalisée dans un matériau magnétique, ledit embout 145 de liaison comportant par exemple un ou plusieurs aimants.

Avantageusement, un tel embout 145 de liaison est destiné à coopérer magnétiquement avec le flasque 144 de l'organe 140 d'actionnement, le flasque 144 étant préférentiellement réalisé dans un matériau métallique tel que de l'acier ou un alliage.

En variante, l'embout 145 de liaison comporte au moins un électroaimant. Avantageusement, un tel électroaimant est commandé sélectivement pour appliquer une force d'attraction magnétique sur l'organe 140 d'actionnement.

Par comparaison avec un liaison mécanique, une liaison magnétique selon cette variante permet de réduire certaines contraintes de fonctionnement comme les réglages nécessaires pour garantir l'engagement de l'embout 146 de liaison formant fourchette avec l'organe 140 d'actionnement.

L'embout 145 de liaison selon la variante de la figure 5 comme l'embout 146 de liaison selon le premier mode de réalisation des figures 2 à 4 sont respectivement solidaires de la tige 148 destinée à être déplacée par les moyens 150 d'actionnement.

Les moyens 150 d'actionnement de chacun des moyens 120 de préhension sont formés par au moins un actionneur 160 électrique.

Les actionneurs 160 électriques sont embarqués sur ladite roue 104 principale du dispositif 102 de convoyage.

De préférence, l'actionneur 160 électrique comporte un moteur linéaire pour entraîner en translation la tige 148 afin de commander sélectivement les moyens 120 de préhension entre les positions inactive et active, en particulier lors des manoeuvres de vêtissage et de dévêtissage.

Tel que représenté sur la figure 1, les actionneurs 160 électriques sont répartis circonférentiellement de manière régulière sur la périphérie de la roue 104 principale du dispositif 102 de convoyage.

Les actionneurs 160 électriques sont agencés avec un écartement ou « pas » correspondant à l'écartement entre deux moyens 120 de préhension consécutifs portés par la chaîne 118 de transport.

On décrira ci-après le fonctionnement du dispositif 102 de convoyage lors des opérations de vêtissage et de dévêtissage et plus particulièrement le premier mode de réalisation représenté sur les figures 2 et 3 dans lequel le fonctionnement de l'actionneur 160 électrique est commandé pour agir sur les moyens 120 de préhension de la préforme 10.

Dans le premier mode de réalisation, les actionneurs 160 électriques sont commandés sélectivement pour déplacer lesdits moyens 120 de préhension par rapport à la préforme 10 en fonction de leur position angulaire autour de l'axe A1 de rotation de la roue 104 principale.

Les moyens 120 de préhension sont montés mobiles relativement à une préforme 10 qui est « fixe », lesdits moyens 120 de préhension étant entraînés en déplacement verticalement entre une position active et une position inactive.

Avant son vêtissage, la préforme 10 supportée par l'intermédiaire de sa collerette 20 qui est logée dans l'une des encoches 114 de la roue 110 de transfert agencée en entrée du four 100. La préforme 10 est amenée par la roue 110 de transfert mais la préforme 10 est fixe selon la direction verticale relativement aux moyens 120 de préhension.

On débutera la description du fonctionnement par l'opération de vêtissage suivie, après le conditionnement thermique, de l'opération de dévêtissage.

L'opération de vêtissage est l'étape initiale au cours de laquelle une préforme 10 transportée par la roue 110 de transfert, est amenée en entrée du four 100 pour être prise en charge par le dispositif 102 de convoyage.

La préforme 10 est amenée par la roue 110 de transfert entraînée en rotation autour de son axe 02 jusqu'au point V, dit point de vêtissage, qui est indiqué sur la figure 1.

Au point V de vêtissage, la préforme 10 vient se positionner à l'aplomb de l'un des moyens 120 de préhension (ou « tournette ») occupant la position inactive représentée sur la figure 3.

En synchronisme avec la roue 110 de transfert, les moyens 120 de préhension liés en déplacement à la chaîne 118 de transport sont entraînés en boucle fermée par l'intermédiaire de la roue 104 principale et de la roue 106 auxiliaire du dispositif 102 de convoyage.

Les actionneurs 160 électriques embarqués sont également déplacés de manière synchrone du fait de l'entraînement en rotation de la roue 104 principale autour de son axe A1 de rotation.

Lorsque les moyens 120 de préhension arrivent au point V de vêtissage, les moyens 120 de préhension sont en position inactive.

Depuis un autre point D, dit de dévêtissage, situé en amont, l'actionneur 160 électrique est commandé pour maintenir les moyens 120 de préhension en position inactive.

En effet, l'actionneur 160 électrique agit alors sur les moyens 120 de préhension de préformes et cela par l'intermédiaire de la tige 148 et de l'embout 146 de liaison coopérant avec l'organe 140 d'actionnement de manière à accoupler mécaniquement l'actionneur 160 électrique avec les moyens 120 de préhension.

Pour ce faire, l'actionneur 160 électrique est commandé pour exercer par l'intermédiaire de l'embout 146 de liaison un effort de traction sur l'organe 140 d'actionnement, plus précisément sur le flasque 144, et ceci à l'encontre du ressort 138 de rappel du mandrin 132 dont la tige 134 est solidaire de l'organe 140 d'actionnement.

Tel que représenté sur la figure 3, le ressort 138 de rappel du mandrin 132 est alors comprimé et la tête 136 de préhension est escamotée à l'intérieur de la jupe 128 de la douille 122 de sorte que rien ne s'étend avantageusement au-delà de la face 130 inférieure.

Au point V de vêtissage, l'actionneur 160 électrique est commandé pour déplacer les moyens 120 de préhension de la position inactive occupée jusqu'alors vers la position active de sorte que le mandrin 132 coulisse verticalement du haut vers le bas.

Tel que représenté sur la figure 2 illustrant les moyens 120 de préhension en position active, la tête 136 s'emmanche alors à l'intérieur de l'ouverture 18 du col 14 de la préforme 10 qui est solidarisée avec les moyens 120 de préhension.

La préforme 10 est ensuite convoyée jusqu'au point C où l'actionneur 160 électrique et les moyens 120 de préhension vont se séparer pour poursuivre chacun leur déplacement.

Du fait de la rotation de la roue 104 principale relativement à la chaîne 118 de transport qui est également entraînée, l'embout 146 de liaison va se désengager radialement de l'organe 140 d'actionnement des moyens 120 de préhension, lesquels moyens 120 de préhension vont poursuivre leur parcours à l'intérieur du four 100.

Chaque préforme 10 en prise par son col 14 avec la tête 136 d'un des moyens 120 de préhension va effectuer, en position « col en haut », un parcours à l'intérieur du four 100 comportant successivement le tronçon de chauffage de pénétration, le tronçon de stabilisation puis le tronçon de chauffage de distribution.

En variante non représentée, les préformes 10 sont convoyées en position dite « col en haut » sur au moins une partie dudit parcours à l'intérieur du four 100.

Sur la roue 104 principale comportant les actionneurs 160 électriques, le secteur angulaire centré sur l'axe A1 et s'étendant entre le point V de vêtissage et le point C constitue un tronçon E d'éjection.

Après le vêtissage au point V et jusqu'au point C où les embout 146 des moyens 150 d'actionnement se désengagent des moyens 120 de préhension, une préforme 10 est susceptible d'être éjectée à tout moment en commandant l'actionneur 160 électrique pour déplacer les moyens 120 de préhension vers le haut, de la position active vers la position inactive.

Avantageusement, l'actionneur 160 électrique permet donc de procéder sélectivement à l'éjection d'une seule préforme 10 et non plus nécessairement d'un groupe de préformes comme c'était le cas jusqu'alors dans l'état de la technique, en raison notamment des cadences élevées de fabrication.

Une telle éjection est par exemple réalisée en cas de détection d'un défaut de vêtissage de la préforme 10, lorsque la tête 136 du mandrin 132 est mal positionnée dans le col 14.

En effet, une préforme 10 mal prise est susceptible de provoquer ensuite des dégâts au niveau du four 100, en particulier au niveau des émetteurs infrarouge.

La détection de ce type de défaut peut être réalisée par un capteur (non représenté) extérieur à l'ensemble que forment l'actionneur 160 électrique et les moyens 120 de préhension.

Un tel capteur peut être un capteur de position notamment un capteur inductif détectant une position de référence du mandrin 132 ou un codeur de l'actionneur 160 électrique donnant également la position de référence du mandrin 132.

L'éjection d'une préforme 10 est obtenue de la même manière que son dévêtissage, l'actionneur 160 électrique est commandé pour exercer, par l'intermédiaire de l'embout 146 de liaison, un effort de traction vers le haut sur le flasque 144 de l'organe 140 d'actionnement des moyens 120 de préhension.

Sous l'effort de traction, le mandrin 132 va coulisser verticalement vers le haut en comprimant le ressort 138 de rappel.

Le bord 19 supérieur du col 14 vient alors en butée contre la face 30 inférieure de la jupe 128 de la douille 122 pour provoquer l'extraction de la tête 136 hors du col 14 et par conséquent l'éjection de la préforme 10.

L'éjection sélective d'une préforme 10 mal prise sur le tronçon E d'éjection permet de l'éliminer avant que la préforme 10 ne poursuite son parcours à l'intérieur du four 100, sur le tronçon de chauffe de pénétration.

Au-delà du point C, chaque préforme 10 prise en charge par des moyens 120 de préhension est convoyée dans le four 100 par la chaîne 118 de transport du dispositif 102 de convoyage et parcourt successivement les tronçons de pénétration, de stabilisation et de distribution.

Au point D', à la fin du tronçon de distribution, l'un des actionneurs 160 électriques que comportent les moyens 150 d'actionnement embarqués sur la roue 104 principale vont à nouveau venir coopérer avec l'un des moyens 120 de préhension lié en déplacement à la chaîne 118 de transport.

Les bras 156 de l'embout 146 de liaison s'engagent radialement autour du fût 143 de l'organe 140 d'actionnement des moyens 120 de préhension qui sont en position active.

Au point D, l'actionneur 160 électrique est commandé pour réaliser le dévêtissage de la préforme 10 chaude qui va alors être prise en charge par l'une des encoches 114 de la roue 112 de transfert ou l'une des pinces (non représentées) d'une roue 112 de transfert afin d'être transportée vers l'aval jusqu'à l'unité de moulage ou « souffleuse » (non représentée).

L'opération de dévêtissage est obtenue en commandant l'actionneur 160 électrique pour exercer un effort de traction sur l'organe 140 d'actionnement afin de déplacer les moyens 120 de préhension de la position active vers la position inactive.

Sur la roue 104 principale, le secteur angulaire centré sur l'axe A1 et s'étendant entre le point D' et le point D de dévêtissage constitue un autre tronçon E' d'éjection.

Sur ce tronçon E' d'éjection, l'éjection d'une préforme 10 est susceptible d'être obtenue en commandant sélectivement l'actionneur 160 électrique de manière à réaliser un dévêtissage de la préforme 10 avant de parvenir au point D de dévêtissage.

L'éjection d'une préforme 10 est obtenue de la même manière que celle décrite précédemment pour le tronçon E d'éjection et permet par exemple d'éliminer avant son transfert une préforme 10 dont le profil de chauffe a été détectée comme étant non conforme, par exemple par des moyens de détection tels qu'une caméra thermique.

En variante non représentée, l'éjection d'au moins une préforme 10 peut également être mise en oeuvre de manière analogue sur la roue 106 auxiliaire.

Dans une telle variante, la roue 106 auxiliaire comporte avantageusement des actionneurs 160 électriques aptes à être commandés sélectivement pour déplacer, relativement à la préforme 10, les moyens 120 de préhension afin d'éliminer ladite préforme 10.

Au-delà du point D de dévêtissage, l'actionneur 160 électrique est avantageusement commandé pour maintenir les moyens 120 de préhension en position inactive, c'est-à-dire pour exercer un effort de traction sur l'organe 140 d'actionnement à l'encontre du ressort 138 de rappel de manière que la tête 136 soit escamotée à l'intérieur de la jupe 128 de la douille 122.

Les moyens 120 de préhension sont ainsi maintenus dans la position inactive illustrée à la figure 3 entre le point D de dévêtissage et le point V de vêtissage de manière à permettre à une préforme 10 destinée à être prise en charge et transportée par la roue 110 de transfert de venir se positionner à l'aplomb des moyens 120 de préhension, sans interférence notamment avec la tête 136 de préhension.

Le fonctionnement des moyens 120 de préhension commandés en déplacement par l'actionneur 160 électrique lors des opérations de vêtissage et de dévêtissage, voir d'éjection, est analogue lorsque la liaison entre les moyens 150 d'actionnement et l'organe 140 d'actionnement est magnétique, par exemple avec un embout 145 de liaison selon la figure 5, et non mécanique.

Dans le premier mode de réalisation représenté sur les figures 2 et 3, l'actionneur 160 électrique est commandé pour entraîner en translation des moyens 120 de préhension relativement à une préforme 10, toutefois cela n'est que l'une des possibilités.

En effet, un actionneur électrique pourrait inversement être utilisé pour entraîner en déplacement la préforme 10 relativement à des moyens de préhension.

Les figures 6 et 7 illustrent un deuxième mode de réalisation dans lequel des actionneurs 260 électriques sont embarqués sur la roue 104 principale du dispositif 102 de convoyage pour entraîner en déplacement une préforme 10 relativement à des moyens 220 de préhension.

Dans ce deuxième mode de réalisation, la préforme 10 est entraînée en déplacement par des moyens 250 d'actionnement comportant un actionneur 260 électrique.

Chaque actionneur 260 électrique est commandé sélectivement pour entraîner une préforme 10, respectivement entre une position inactive dans laquelle la préforme 10 est libre par rapport aux moyens 220 de préhension et une position active dans laquelle la préforme 10 est prise, solidaire des moyens 220 de préhension.

Tel qu'illustré sur les figures 6 et 7, les moyens 220 de préhension comportent un arbre 222 qui est solidaire d'un moyen de transport tel qu'une chaîne 218 représentée schématiquement.

L'arbre 222 des moyens 220 de préhension est immobile verticalement mais est avantageusement susceptible d'être entrainé en rotation par l'intermédiaire d'un organe 224 d'actionnement agencé à l'extrémité supérieure de l'arbre 222.

De préférence, l'organe 224 d'actionnement comporte au moins un pignon 226 destiné à coopérer avec des moyens d'engrènement complémentaires (non représentés) tels qu'une crémaillère afin d'entrainer l'arbre 222 en rotation sur lui-même autour de l'axe X.

Les moyens 220 de préhension comporte une tête 228 de préhension qui, agencée à l'extrémité inférieure de l'arbre 222, est configurée pour s'emmancher à l'intérieur du col 14 d'une préforme 10.

Les moyens 250 d'actionnement comportent par exemple un moyen 252 de liaison reliant un actionneur 260 électrique à des moyens de saisie d'une préforme 10, tels qu'une pince 254.

De préférence, la pince 254 est configurée pour coopérer avec la collerette 20 de la préforme 10.

Avantageusement, la pince 254 est apte à exercer sur la collerette 20 un effort de traction orienté verticalement vers le bas afin de réaliser un dévêtissage ou une éjection de la préforme 10.

Par comparaison avec le premier mode de réalisation, c'est par conséquent la préforme 10 qui est déplacée suivant l'axe X relativement aux moyens 220 de préhension qui sont immobiles selon la direction verticale.

Les principes de fonctionnement de tels moyens 250 d'actionnement pour réaliser les opérations de vêtissage et de dévêtissage, voire d'éjection, sont pour le reste similaires à ceux décrits précédemment pour le premier mode de réalisation.

L'invention propose encore un procédé de commande d'un dispositif 102 de convoyage de préforme 10 en matière thermoplastique pour un four 100 de conditionnement thermique, ledit dispositif 102 de convoyage comportant au moins une roue 104 principale sur laquelle sont embarqués des actionneurs 160 électriques qui sont chacun aptes à entraîner en déplacement des moyens 120 de préhension relativement à une préforme 10 - ou réciproquement une préforme 10 relativement à des moyens 120 de préhension - entre une position inactive et une position active de préhension, caractérisé en ce que le procédé de commande comporte au moins une étape de vêtissage consistant à commander sélectivement l'actionneur 160 électrique à un point V de vêtissage de la roue 104 principale pour entraîner en déplacement les moyens 120 de préhension ou la préforme 10 de la position inactive jusqu'à la position active de préhension.

Avantageusement, le procédé de commande comporte au moins une étape de dévêtissage consistant à commander sélectivement l'actionneur 160 électrique à un point D de dévêtissage de la roue 104 principale pour entraîner en déplacement les moyens 120 de préhension ou la préforme 10 de la position active de préhension jusqu'à la position inactive.

Avantageusement, le procédé de commande comporte au moins une étape d'éjection consistant à commander sélectivement l'actionneur 160 électrique sur un tronçon E, E' d'éjection de la roue 104 principale pour entraîner en déplacement les moyens 120 de préhension ou la préforme 10 de la position active jusqu'à la position inactive afin de provoquer l'éjection de la préforme 10.

Avantageusement, ladite au moins une étape d'éjection est réalisée sur un tronçon E d'éjection situé en aval du point V de vêtissage.

Avantageusement, ladite au moins une étape d'éjection est réalisée dans un tronçon E' d'éjection situé en amont du point D de dévêtissage.

## Revendications

1. Dispositif (102) de convoyage de préformes (10) en matière thermoplastique pour un four (100) de conditionnement thermique, ledit dispositif (102) de convoyage de préformes (10) comportant au moins une roue (104) principale et une roue (106) auxiliaire dont l'une au moins est entraînée en rotation pour déplacer au moins un moyen (118) de transport auquel sont liés en déplacement une pluralité de moyens (120) de préhension configurés pour coopérer chacun avec une préforme (10), des moyens (150) d'actionnement commandés pour déplacer sélectivement chacun desdits moyens (120) de préhension par rapport à une préforme (10) - ou réciproquement - entre une position inactive et une position active de préhension, **caractérisé en ce que** lesdits moyens (150) d'actionnement comportent des actionneurs (160) électriques qui sont embarqués sur ladite roue (104) principale du dispositif (102) de convoyage.

2. Dispositif selon la revendication 1, **caractérisé en ce que** l'actionneur (160) électrique est commandé sélectivement pour déplacer, relativement à la préforme, les moyens (120) de préhension de la position inactive vers la position active pour réaliser un vêtissage de la préforme (10) et de la position active vers la position inactive pour réaliser un dévêtissage ou une éjection de la préforme (10).

3. Dispositif selon la revendication 2, **caractérisé en ce que** les moyens (150) d'actionnement comportent un embout (146) de liaison qui est configuré pour coopérer mécaniquement avec un organe (140) d'actionnement que comportent les moyens (120) de préhension.

4. Dispositif selon la revendication 2, **caractérisé en ce que** les moyens (150) d'actionnement comportent un embout (145) de liaison qui est configuré pour coopérer magnétiquement avec un organe (140) d'actionnement que comportent les moyens (120) de préhension.

5. Dispositif selon la revendication 1, **caractérisé en ce que** l'actionneur (160) électrique est commandé sélectivement pour déplacer la préforme (10), relativement aux moyens (120) de préhension, de la position inactive vers la position active pour réaliser un vêtissage de la préforme (10) et de la position active vers la position inactive pour réaliser un dévêtissage ou une éjection de la préforme (10).

6. Procédé de commande d'un dispositif (102) de convoyage de préforme (10) en matière thermoplastique pour un four (100) de conditionnement thermique, ledit dispositif (102) de convoyage comportant au moins une roue (104) principale sur laquelle sont embarqués des actionneurs (160) électriques qui sont chacun aptes à entraîner en déplacement des moyens (120) de préhension relativement à une préforme (10) - ou réciproquement une préforme (10) relativement à des moyens (120) de préhension - entre une position inactive et une position active de préhension, **caractérisé en ce que** le procédé de commande comporte au moins une étape de vêtissage consistant à commander sélectivement l'actionneur (160) électrique à un point (V) de vêtissage de la roue (104) principale pour entraîner en déplacement les moyens (120) de préhension ou la préforme (10) de la position inactive jusqu'à la position active de préhension.

7. Procédé de commande selon la revendication 6, **caractérisé en ce que** le procédé de commande comporte au moins une étape de dévêtissage consistant à commander sélectivement l'actionneur (160) électrique à un point (D) de dévêtissage de la roue (104) principale pour entraîner en déplacement les moyens (120) de préhension ou la préforme (10) de la position active de préhension jusqu'à la position inactive.

8. Procédé de commande selon la revendication 6, **caractérisé en ce que** le procédé de commande comporte au moins une étape d'éjection consistant à commander sélectivement l'actionneur (160) électrique sur un tronçon (E, E') d'éjection de la roue (104) principale pour entraîner en déplacement les moyens (120) de préhension ou la préforme (10) de la position active jusqu'à la position inactive afin de provoquer l'éjection de la préforme (10).

9. Procédé de commande selon la revendication 8, **caractérisé en ce que** ladite au moins une étape d'éjection est réalisée sur un tronçon (E) d'éjection situé en aval du point (V) de vêtissage.

10. Procédé de commande selon la revendication 8 ou 9, **caractérisé en ce que** ladite au moins une étape d'éjection est réalisée dans un tronçon (E') d'éjection situé en amont du point (D) de dévêtissage.

## Patentansprüche

1. Vorrichtung (102) zum Fördern von Vorformlingen (10) aus Kunststoff für einen Ofen (100) zur thermischen Konditionierung, wobei die Vorrichtung (102) zum Fördern von Vorformlingen (10) mindestens ein Hauptrad (104) und ein Hilfsrad (106) umfasst, von denen mindestens eines drehangetrieben wird, um mindestens ein Transportmittel (118) zu bewegen, mit dem mehrere Greifmittel (120) bewegungsverbunden sind, die dazu ausgestaltet sind, jeweils mit einem Vorformling (10) zusammenzuwirken, Betätigungsmittel (150), die gesteuert werden, um selektiv jedes der Greifmittel (120) in Bezug auf einen Vorformling (10) - oder umgekehrt - zwischen einer inaktiven Stellung und einer aktiven Greifstellung zu bewegen, **dadurch gekennzeichnet, dass** die Betätigungsmittel (150) elektrische Aktoren (160) umfassen, die in das Hauptrad (104) der Fördervorrichtung (102) integriert sind.

2. Vorrichtung nach Anspruch 1, **dadurch gekennzeichnet, dass** der elektrische Aktor (160) selektiv gesteuert wird, um relativ zum Vorformling die Greifmittel (120) von der inaktiven Stellung zu der aktiven Stellung zu bewegen, um ein Aufnehmen des Vorformlings (10) auszuführen, und von der aktiven Stellung zur inaktiven Stellung, um ein Abstreifen oder ein Ausschleusen des Vorformlings (10) auszuführen.

3. Vorrichtung nach Anspruch 2, **dadurch gekennzeichnet, dass** die Betätigungsmittel (150) ein Verbindungsstück (146) umfassen, das dazu ausgestaltet ist, mechanisch mit einem Betätigungselement (140) zusammenzuwirken, welches die Greifmittel (120) umfassen.

4. Vorrichtung nach Anspruch 2, **dadurch gekennzeichnet, dass** die Betätigungsmittel (150) ein Verbindungsstück (145) umfassen, das dazu ausgestaltet ist, magnetisch mit einem Betätigungselement (140) zusammenzuwirken, welches die Greifmittel (120) umfassen.

5. Vorrichtung nach Anspruch 1, **dadurch gekennzeichnet, dass** der elektrische Aktor (160) selektiv gesteuert wird, um den Vorformling (10), relativ zu den Greifmitteln (120), von der inaktiven Stellung zu der aktiven Stellung zu bewegen, um ein Aufnehmen des Vorformlings (10) auszuführen, und von der aktiven Stellung zu der inaktiven Stellung, um ein Abstreifen oder ein Ausschleusen des Vorformlings (10) auszuführen.

6. Verfahren zur Steuerung einer Vorrichtung (102) zum Fördern von Vorformlingen (10) aus Kunststoff für einen Ofen (100) zur thermischen Konditionierung, wobei die Fördervorrichtung (102) mindestens ein Hauptrad (104) umfasst, in das elektrische Aktoren (160) integriert sind, die jeweils geeignet sind, Greifmittel (120) relativ zu einem Vorformling (10) - oder umgekehrt einen Vorformling (10) relativ zu Greifmitteln (120) - zwischen einer inaktiven Stellung und einer aktiven Stellung mitzubewegen, **dadurch gekennzeichnet, dass** das Steuerungsverfahren mindestens einen Aufnahmeschritt umfasst, der darin besteht, den elektrischen Aktor (160) an einem Aufnahmepunkt (V) des Hauptrades (104) selektiv zu steuern, um die Greifmittel (120) oder den Vorformling (10) von der inaktiven Stellung bis zur aktiven Greifstellung mitzubewegen.

7. Steuerungsverfahren nach Anspruch 6, **dadurch gekennzeichnet, dass** das Steuerungsverfahren mindestens einen Abstreifschritt umfasst, der darin besteht, den elektrischen Aktor (160) an einem Abstreifpunkt (D) des Hauptrades (104) selektiv zu steuern, um die Greifmittel (120) oder den Vorformling (10) von der aktiven Greifstellung bis zur inaktiven Position mitzubewegen.

8. Steuerungsverfahren nach Anspruch 6, **dadurch gekennzeichnet, dass** das Steuerungsverfahren mindestens einen Ausschleusschritt umfasst, der darin besteht, den elektrischen Aktor (160) auf einem Ausschleusabschnitt (E, E') des Hauptrades (104) selektiv zu steuern, um die Greifmittel (120) oder den Vorformling (10) von der aktiven Greifstellung bis zur inaktiven Stellung mitzubewegen, um das Ausschleusen des Vorformlings (10) zu bewirken.

9. Steuerungsverfahren nach Anspruch 8, **dadurch gekennzeichnet, dass** der mindestens eine Ausschleusschritt auf einem Ausschleusabschnitt (E) ausgeführt wird, der stromab des Aufnahmepunkts (V) gelegen ist.

10. Steuerungsverfahren nach Anspruch 8 oder 9, **dadurch gekennzeichnet, dass** der mindestens eine Ausschleusschritt in einem Ausschleusabschnitt (E') ausgeführt wird, der stromauf des Abstreifpunkts (D) gelegen ist.

## Claims

1. Device (102) for conveying thermoplastic preforms (10) for use in a heat treatment oven (100), said device (102) for conveying preforms (10) having at least one main wheel (104) and one auxiliary wheel (106), at least one of which is driven in rotation to move at least one transport means (118) to which are movably connected a plurality of holding means (120) each configured to interact with a preform (10), actuating means (150) controlled to selectively move each of said holding means (120) with respect to a preform (10) - or vice versa - between an inactive position and an active holding position, **characterized in that** said actuating means (150) have electric actuators (160) which are built into said main wheel (104) of the conveying device (102).

2. Device according to Claim 1, **characterized in that** the electric actuator (160) is selectively controlled to move, relative to the preform, the holding means (120) from the inactive position to the active position in order to load the preform (10) and from the active position to the inactive position in order to load or eject the preform (10).

3. Device according to Claim 2, **characterized in that** the actuating means (150) have a connecting tip (146) which is configured to mechanically interact with an actuating member (140) comprised by the holding means (120) .

4. Device according to Claim 2, **characterized in that** the actuating means (150) have a connecting tip (145) which is configured to magnetically interact with an actuating member (140) comprised by the holding means (120) .

5. Device according to Claim 1, **characterized in that** the electric actuator (160) is selectively controlled to move the preform (10), relative to the holding means (120), from the inactive position to the active position in order to load the preform (10) and from the active position to the inactive position in order to unload or eject the preform (10).

6. Method for controlling a device (102) for conveying a thermoplastic preform (10) for use in a heat treatment oven (100), said conveying device (102) having at least one main wheel (104) into which are built electric actuators (160) each of which is able to move holding means (120) relative to a preform (10) - or, conversely, a preform (10) relative to holding means (120) - between an inactive position and an active holding position, **characterized in that** the control method has at least one loading step consisting in selectively controlling the electric actuator (160) at a loading point (V) of the main wheel (104) to move the holding means (120) or the preform (10) from the inactive position to the active holding position.

7. Control method according to Claim 6, **characterized in that** the control method has at least one unloading step consisting in selectively controlling the electric actuator (160) at an unloading point (D) of the main wheel (104) to move the holding means (120) or the preform (10) from the active holding position to the inactive position.

8. Control method according to Claim 6, **characterized in that** the control method has at least one ejection step consisting in selectively controlling the electric actuator (160) at an ejection section (E, E') of the main wheel (104) to move the holding means (120) or the preform (10) from the active position to the inactive position in order to bring about the ejection of the preform (10).

9. Control method according to Claim 8, **characterized in that** said at least one ejection step is performed at an ejection section (E) located downstream of the loading point (V).

10. Control method according to Claim 8 or 9, **characterized in that** said at least one ejection step is performed in an ejection section (E') located upstream of the unloading point (D).
